# EUROPÄISCHE PATENTSCHRIFT

(11) **EP 2 200 169 B1**
(45) Veröffentlichungstag und Bekanntmachung des Hinweises auf die Patenterteilung: **02.04.2014**
(21) Anmeldenummer: 09015242.2
(22) Anmeldetag: 09.12.2009
(51) Int. Cl.: H02P 1/46, F03D 9/00, H02P 1/26, H02P 9/10

(54) **Verfahren zum Starten einer doppelt-gespeisten Asynchronmaschine**
Method for starting a doubly-fed induction machine
Procédé de démarrage d'une machine asynchrone à double alimentation

(30) Priorität: 19.12.2008 DE 102008064078
(43) Veröffentlichungstag der Anmeldung: 23.06.2010
(73) Patentinhaber: GE Energy Power Conversion Technology Limited, Rugby Warwickshire CV21 1BU (GB)
(72) Erfinder: Janning, Jörg, Dr., 12559 Berlin (DE)
(74) Vertreter: Serjeants LLP

(56) Entgegenhaltungen:
- EP-A1- 1 499 009
- GB-A- 628 967
- JP-A- 63 202 290

## Beschreibung

Die Erfindung betrifft ein Verfahren zum Starten einer Asynchronmaschine, wobei der Stator der Asynchronmaschine mit einem Energieversorgungsnetz verbunden ist, und wobei der Rotor über einen Wechselrichter, einen Gleichspannungs-Zwischenkreis und einen Gleichrichter mit dem Energieversorgungsnetz verbunden ist. Die Erfindung betrifft ebenfalls eine entsprechende elektrische Schaltung zum Betreiben einer Asynchronmaschine.

Üblicherweise ist zum Starten einer Asynchronmaschine ein sogenannter Anfahr-Umrichter vorgesehen, der nur die Aufgabe hat, die Asynchronmaschine aus dem Stillstand auf eine erwünschte Drehzahl zu beschleunigen. Nach Erreichen dieser Drehzahl wird in den Normalbetrieb der Asynchronmaschine übergegangen.

Ersichtlich stellt dieser Anfahr-Umrichter einen erheblichen zusätzlichen Aufwand und damit auch zusätzliche Kosten dar. Das geregelte Anfahren einer doppeltgespeisten Asynchronmashine unter Berücksichtigung des Kippmoments ist Gegenstand des Dokuments JP63202290 .

Aufgabe der Erfindung ist es, ein Starten der Asynchronmaschine zu ermöglichen, ohne dass hierzu ein Anfahr-Umrichter erforderlich ist.

Diese Aufgabe wird durch ein Verfahren nach dem Anspruch 1 sowie durch eine elektrische Schaltung nach dem Anspruch 8 gelöst.

Erfindungsgemäß ist vorgesehen, dass der von dem Wechselrichter vorgegebene Rotorstrom vermindert wird, nachdem das auf den Rotor einwirkende Drehmoment das aufgrund der Rotorspannung vorhandene Kippmoment unterschritten hat, und dass danach die von dem Gleichrichter über die Zwischenkreis-Spannung vorgegebene Rotorspannung erhöht wird. Das vorgenannte Kippmoment hat zur Folge, dass das auf den Rotor einwirkende Drehmoment entsprechend dem Verlauf des Kippmoments bei steigender Drehzahl immer geringer wird. Wenn das auf den Rotor einwirkende Drehmoment auf einen Wert abgenommen hat, der bei der aktuell vorhandenen Drehzahl ein weiteres Ansteigen der Drehzahl der Asynchronmaschine nur noch sehr langsam oder gar nicht mehr möglich macht, so eröffnet die Verminderung des Rotorstroms die Möglichkeit, dass nunmehr die Rotorspannung erhöht werden kann. Auf diese Weise wird eine Erhöhung des Kippmoments erreicht, was gleichbedeutend damit ist, dass sich das auf den Rotor einwirkende Drehmoment entsprechend diesem erhöhten Kippmoment einstellen kann. Insgesamt ist es damit möglich, die Asynchronmaschine aus dem Stillstand auf eine erwünschte Drehzahl zu beschleunigen, ohne dass hierzu ein Anfahr-Umrichter oder dergleichen erforderlich ist.

Besonders vorteilhaft ist es, wenn zur Erhöhung der Rotorspannung die Zwischenkreis-Spannung über den an sich für die Zwischenkreis-Spannung vorgesehenen Nennwert angehoben wird. Dies ist aufgrund der vorhergehenden Verminderung des Rotorstroms möglich. Eine Gefährdung des Gleichrichters oder des Gleichspannungs-Zwischenkreises oder des Wechselrichters entsteht dabei nicht.

Danach kann das vorstehende Verfahren in entsprechender Weise wiederholt werden. Dies hat zur Folge, dass das Kippmoment weiter erhöht wird und sich das auf den Rotor einwirkende Drehmoment entsprechend diesem erhöhten Kippmoment einstellen kann. Wie bereits erwähnt wurde, kann damit ein Starten der Asynchronmaschine ohne zusätzlichen Aufwand, insbesondere ohne einen speziellen Anfahr-Umrichter durchgeführt werden.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

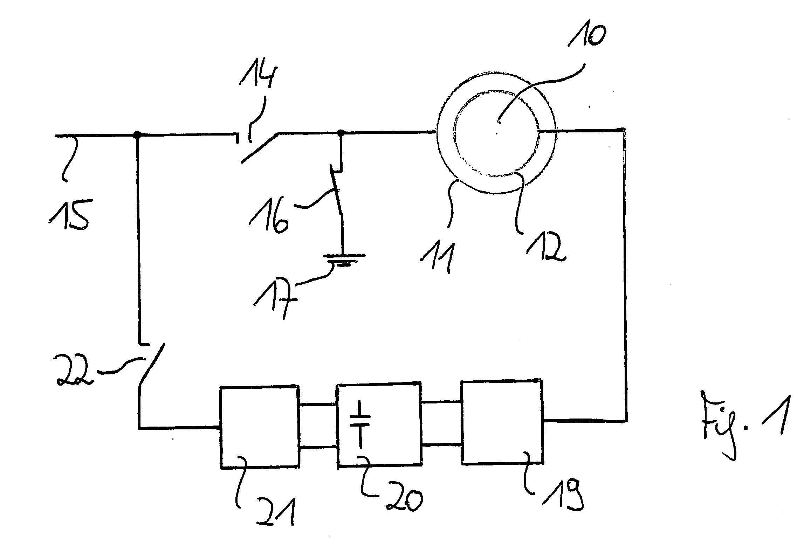

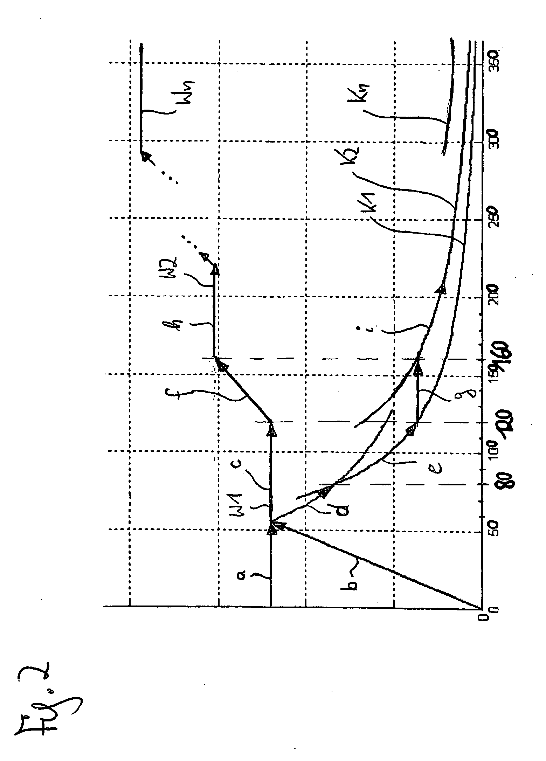

Figur 1 zeigt ein schematisches Blockschaltbild eines Ausführungsbeispiels einer erfindungsgemäßen elektrischen Schaltung zum Betreiben einer doppelt-gespeisten Asynchronmaschine und Figur 2 zeigt ein schematisches Diagramm von Betriebsgrößen der Asynchronmaschine der Figur 1.

In der Figur 1 ist eine elektrische Schaltung einer Phase einer doppelt-gespeisten Asynchronmaschine 10 dargestellt, die einen Stator 11 und einen Rotor 12 aufweist. Der Stator 11 ist über einen statorseitigen Hauptschalter 14 mit einem Energieversorgungsnetz 15 verbunden. Weiterhin ist vorgesehen, dass die Phasen des Stators 11 zueinander kurzgeschlossen werden können. Dies wird in dem Ausführungsbeispiel der Figur 1 dadurch realisiert, dass die Phasen des Stators 11 über einen Kurzschlussschalter 16 mit Erde bzw. Masse 17 verbunden sind. Der Rotor 12 ist mit einem Wechselrichter 19 verbunden, der seinerseits über einen Gleichspannungs-Zwischenkreis 20 mit einem Gleichrichter 21 verbunden ist. Der Gleichrichter 21 ist über einen rotorseitigen Hauptschalter 22 mit dem Energieversorgungsnetz 15 verbunden.

Bei dem Wechselrichter 19 und dem Gleichrichter 21 handelt es sich um elektrische Stromrichter, die vorzugsweise mit Hilfe von Leistungshalbleiterbauelementen, beispielsweise mit Hilfe von sogenannten IGBTs (IGBT = insulated gate bipoar transistor) oder sogenannten GTOs (GTO = gate turn off Thyristoren) aufgebaut sind. Hierzu können sogenannte Zwei-Level- oder auch Multi-Level-Schaltungen vorgesehen sein. Der Gleichstrom-Zwischenkreis 20 kann beispielsweise aus einem oder mehreren in Serie geschalteten Kondensator/en bestehen. Bei dem Gleichrichter 21 kann es sich um einen beispielsweise selbstgeführten Stromrichter handeln, der die Zwischenkreisspannung regelt. Beispielsweise kann ein Thyristor-Gleichrichter vorhanden sein.

Sowohl der Wechselrichter 19, als auch der Gleichrichter 21 können mit weiteren Komponenten zur Filterung der Ausgangsspannung versehen sein. Der Gleichrichter 21 kann auch eine vorgelagerte Drossel oder einen Transformator zur Entkopplung und/oder Spannungsanpassung aufweisen.

Der von dem Wechselrichter 19 an den Rotor 12 gelieferte Strom wird nachfolgend als Rotorstrom, die an dem Rotor 12 anliegende Spannung wird als Rotorspannung und die im Gleichspannungs-Zwischenkreis 20 vorhandene Gleichspannung wird als Zwischenkreis-Spannung bezeichnet.

Das Starten der Asynchronmaschine 10 wird nachfolgend unter Bezugnahme auf die Figur 2 erläutert. In der Figur 2 sind verschiedene Betriebsgrößen der Asynchronmaschine 10 der Figur 1 über der Drehzahl der Asynchronmaschine 10 aufgetragen. Die Werte für die Drehzahl sind in der Figur 2 in Umdrehungen pro Minute angegeben. Es wird darauf hingewiesen, dass die in der Figur 2 eingetragenen Werte für die Drehzahl nur beispielhafter Natur und nur zum Zwecke der Beschreibung ausgewählt worden sind, und dass diese Werte deshalb in Abhängigkeit von einer tatsächlich verwendeten Asynchronmaschine 10 wesentlich abweichen können.

Zum Starten der Asynchronmaschine 10, also zum Beschleunigen der Asynchronmaschine 10 vom Stillstand auf eine erwünschte Drehzahl, werden der statorseitige Hauptschalter 14 und der rotorseitige Hauptschalter 22 geöffnet und der Kurzschlussschalter 16 wird geschlossen. Der Stator 11 ist damit nach Erde kurzgeschlossen, so dass auch die einzelnen Wicklungen des Stators 11 kurzgeschlossen sind. Dieser Zustand ist in der Figur 1 dargestellt und entspricht dem Zustand bei der Drehzahl Null in der Figur 2.

Danach wird der rotorseitige Hauptschalter 22 in seinen geschlossenen Zustand überführt und der Gleichrichter 21 nimmt seinen Betrieb auf. Der Gleichrichter 21 speist damit den Gleichspannungs-Zwischenkreis 20 und bewirkt, dass die Zwischenkreis-Spannung aus dem Energieversorgungsnetz 15 auf einen vorgegebenen Wert geregelt wird. Mit dieser Zwischenkreis-Spannung kann jede beliebige Rotorspannung eingestellt werden, wobei nur eine Begrenzung durch die Größe der Zwischenkreis-Spannung gegeben ist. Damit kann nunmehr der Wechselrichter 19 derart angesteuert werden, dass dem Rotor 12 ein möglichst großer zulässiger Rotorstrom eingeprägt wird.
Die Asynchronmaschine 10 wird durch die Ansteuerung des Wechselrichters 19 erregt und es entsteht ein magnetischer Fluss mit etwa konstanter Amplitude. Durch eine geeignete Veränderung der Phasenlage des Rotorstroms entsteht ein auf den Rotor 12 einwirkendes, etwa konstantes Drehmoment. Dies ist in der Figur 2 mit dem Bezugszeichen a gekennzeichnet.

Danach wird die Rotorspannung von dem Wechselrichter 19 entsprechend einem vorgegebenen Anstieg erhöht, beispielsweise durch Pulsweiten-Modulation der Zwischenkreis-Spannung. Dies ist in der Figur 2 mit dem Bezugszeichen b gekennzeichnet.

Diese Maßnahmen führen zu einem Anlaufen des Rotors 12 aus dem Stillstand, also ausgehend von der Drehzahl Null. Die Drehzahl des Rotors 12 steigt auf diese Weise bis zu Werten von etwa 50 Umdrehungen pro Minute an und die Rotorspannung steigt etwa proportional zu dieser Drehzahl an. Hierzu wird nochmals auf das Bezugszeichen b der Figur 2 verwiesen.

Erreicht die Drehzahl den vorstehend beispielhaft genannten Bereich von etwa 50 Umdrehungen pro Minute, so wird die Rotorspannung auf einem etwa konstanten Wert W1 gehalten, der typischerweise etwa der maximalen Ausgangsspannung des Wechselrichters 19 bei konstanter Zwischenkreis-Spannung entspricht. Dies ist in der Figur 2 mit dem Bezugszeichen c gekennzeichnet. Die Zwischenkreis-Spannung hat ab diesem Bereich etwa ihren für den Nennbetrieb des Gleichrichters 21 vorgesehenen Wert angenommen. Dies hat zur Folge, dass sich der magnetische Fluss in seiner Amplitude und damit auch das auf den Rotor 12 einwirkende Drehmoment vermindert. Letzteres ist in der Figur 2 mit dem Bezugszeichen d gekennzeichnet.

In der Figur 2 ist ein sogenanntes Kippmoment eingezeichnet und mit dem Bezugszeichen K1 gekennzeichnet. Das Kippmoment K1 stellt eine obere Grenze für das von der Asynchronmaschine 10 erzeugbare Drehmoment dar, und zwar bei der aktuell vorliegenden Zwischenkreis-Spannung und der sich daraus ergebenden maximalen Rotorspannung. Das über der Drehzahl vorhandene, auf den Rotor 12 einwirkende Drehmoment der Asynchronmaschine 10 kann also bei der eingestellten Rotorspannung nicht größer werden als das jeweils zugehörige Kippmoment K1.

Gemäß der Figur 2 unterschreitet das Kippmoment K1 das auf den Verlauf des auf den Rotor 12 einwirkenden Drehmoments bei einer Drehzahl von etwa 80 Umdrehungen pro Minute. Nach diesem Unterschreiten wird der Rotorstrom vermindert, um das maximal mögliche Kippmoment einstellen zu können. Das auf den Rotor 12 einwirkende Drehmoment wird daraufhin entsprechend dem Verlauf des Kippmoments K1 bei steigender Drehzahl immer geringer. Dies ist in der Figur 2 mit dem Bezugszeichen e gekennzeichnet.

Bei einer Drehzahl von beispielsweise 120 Umdrehungen pro Minute hat das auf den Rotor 12 einwirkende Drehmoment auf einen Wert abgenommen, der bei der aktuell vorhandenen Drehzahl ein weiteres Ansteigen der Drehzahl der Asynchronmaschine 10 nur noch sehr langsam oder gar nicht mehr möglich machen würde. Dies kann beispielsweise durch ein mit der Drehzahl ansteigendes Lastmoment hervorgerufen werden. Ab dieser Drehzahl von beispielsweise 120 Umdrehungen pro Minute wird deshalb die Rotorspannung erhöht, indem die Zwischenkreis-Spannung erhöht wird. Dies ist in der Figur 2 mit dem Bezugszeichen f gekennzeichnet.

Die Zwischenkreis-Spannung kann dabei über den an sich vorgegebenen Nennwert angehoben werden, da der Rotorstrom zuvor vermindert worden ist. Damit wird insgesamt gewährleistet, dass der Gleichrichter 21, der Gleichspannungs-Zwischenkreis 20 und der Wechselrichter 19 nicht überlastet werden.

Die Rotorspannung kann mit Hilfe einer Erhöhung der Zwischenkreis-Spannung gemäß der Figur 2 in der Form einer Rampe auf einen Wert W2 erhöht werden. Es ist auch möglich, jegliche andere Übergangskurve für die Erhöhung vorzusehen. Ebenfalls ist es möglich, die Rotorspannung nahezu sprungförmig auf den Wert W2 zu verändern, indem der magnetische Fluss schnell erhöht wird und mehr Strom zur Bildung des Drehmoments eingespeist wird.

Durch die Erhöhung der Zwischenkreis-Spannung nimmt das auf den Rotor 12 einwirkende Drehmoment nicht entlang dem Verlauf des Kippmoments K1 weiter ab, sondern bleibt auf einem etwa konstanten Wert stehen. Entsprechendes gilt für den magnetischen Fluss. Dies ist in der Figur 2 mit dem Bezugszeichen g gekennzeichnet und hat zur Folge, dass sich die Drehzahl der Asynchronmaschine 10 weiter erhöht. Das Erreichen des Werts W2 der Rotorspannung entspricht dabei etwa einer Drehzahl von beispielhaft 160 Umdrehungen pro Minute.

Zu dem Wert W2 der Rotorspannung gehört ein Kippmoment K2. Nach dem Erreichen des Werts W2 der Rotorspannung wird diese etwa konstant gehalten. Dies ist in der Figur 2 mit dem Bezugszeichen h gekennzeichnet. Gleichzeitig wird der Rotorstrom vermindert. Dies hat zur Folge, dass das auf den Rotor 12 einwirkende Drehmoment wieder entlang dem Verlauf des Kippmoments K2 kleiner wird. Dies ist in der Figur 2 mit dem Bezugszeichen i gekennzeichnet.

Die Verminderung des Rotorstroms eröffnet wieder die Möglichkeit, dass die Zwischenkreis-Spannung und damit auch die Rotorspannung weiter angehoben wird. Das auf den Rotor 12 einwirkende Drehmoment bleibt dann zuerst wieder etwa konstant und vermindert sich danach entsprechend dem Verlauf des zu der neuen Zwischenkreis-Spannung zugehörigen Kippmoments. Dieser Ablauf kann mehrfach wiederholt werden.

Letztlich kann auf diese Weise die Rotorspannung auf einen Wert Wn angehoben werden, zu dem ein Kippmoment Kn gehört. Das auf den Rotor 12 einwirkende Drehmoment verläuft dann letztlich entsprechend diesem Kippmoment Kn.

Ersichtlich ist das Kippmoment Kn für größere Drehzahlen der Asynchronmaschine 10 wesentlich größer als das anfängliche Kippmoment K1. Das auf den Rotor 12 einwirkende Drehmoment fällt damit für größere Drehzahlen nicht auf das geringere Kippmoment K1 ab, sondern es verbleibt ein größeres, dem Kippmoment Kn entsprechendes Drehmoment auch bei größeren Drehzahlen bestehen.

Bei höheren Drehzahlen kann eine Erhöhung der Rotorspannung auch durch eine Erhöhung der Aussteuerung des Wechselrichters 19 bis hin zu einer sogenannten Blocktaktung bei gleichbleibender Zwischenkreis-Spannung erreicht werden. Hierbei sind gegebenenfalls die zusätzlichen Oberschwingungen, die auf die Asynchronmaschine 10 einwirken, zu berücksichtigen.

Bei einer Drehzahl des Rotors 12 von beispielsweise über 350 Umdrehungen pro Minute wird die Asynchronmaschine 10 dadurch entmagnetisiert, dass die Amplitude und Phasenlage des Rotorstroms gezielt verändert wird. Typischerweise wird die für die Magnetisierung zuständige Stromkomponente bis hin zu negativen Werten verstellt, bis die Entmagnetisierung erreicht ist. Aufgrund der vorhandenen hohen Feldschwächung kann diese Entmagnetisierung innerhalb einer sehr kurzen Zeitdauer von insbesondere weniger als einer Sekunde durchgeführt werden, so dass dies im wesentlichen keinen Einfluss auf die Drehzahl des Rotors 12 hat.

Danach wird der Rotorstrom über den Wechselrichter 19 abgeschaltet, damit sichergestellt ist, dass der Kurzschlussschalter 16 nahezu stromlos geöffnet werden kann. Die Asynchronmaschine 10 wird dann wieder magnetisiert und mit dem Energieversorgungsnetz 15 synchronisiert. Ist dies erreicht, so wird der statorseitige Hauptschalter 14 geschlossen. Die Asynchronmaschine 10 wird nunmehr in ihrem Normalbetrieb betrieben.

Bei einer Ausführung des Kurzschlussschalters 16 als Leistungsschalter oder als Lasttrennschalter, der ausreichend hohe Ströme abschalten kann, ist eine vorherige Entmagnetisierung nicht erforderlich.

In dem (nicht-dargestellten) Normalbetrieb der Asynchronmaschine 10 ist - wie vorstehend erläutert wurde - der Kurzschlussschalter 16 geöffnet und der statorseitige Hauptschalter 14 sowie der rotorseitige Hauptschalter 22 sind geschlossen. In diesem Normalbetrieb liegt der Stator 11 direkt am Energieversorgungsnetz 15 an und der Rotor 12 wird über den Gleichrichter 21, den Gleichspannungs-Zwischenkreis 20 und den Wechselrichter 19 von dem Rotorstrom und der Rotorspannung beaufschlagt. Dabei handelt es sich um im wesentlichen sinusförmige Ströme und Spannungen mit veränderbarer Frequenz. Die Drehzahl des Rotors 12 der Asynchronmaschine 10 kann dabei über die vorgenannte Frequenz in einem vorgegebenen Bereich eingestellt bzw. verändert werden.

Ausgehend von der beispielhaft vorhandenen Drehzahl von etwa 350 Umdrehungen pro Minute kann der Rotor 12 somit nunmehr im Normalbetrieb durch eine entsprechend gewählte Frequenz des Rotorstroms und der Rotorspannung weiter auf eine erwünschte Drehzahl beschleunigt werden.

## Patentansprüche

1. Verfahren zum Starten einer Asynchronmaschine (10), wobei der Stator (11) der Asynchronmaschine (10) mit einem Energieversorgungsnetz (15) verbunden ist, und wobei der Rotor (12) über einen Wechselrichter (19), einen Gleichspannungs-Zwischenkreis (20) und einen Gleichrichter (21) mit dem Energieversorgungsnetz (15) verbunden ist, **dadurch gekennzeichnet, dass** der von dem Wechselrichter (19) vorgegebene Rotorstrom vermindert wird (e), nachdem das auf den Rotor (12) einwirkende Drehmoment das aufgrund der Rotorspannung vorhandene Kippmoment (K1) unterschritten hat, und dass danach die von dem Gleichrichter (21) über die Zwischenkreis-Spannung vorgegebene Rotorspannung erhöht wird (f).

2. Verfahren nach Anspruch 1, wobei die Zwischenkreis-Spannung über den an sich für die Zwischenkreis-Spannung vorgesehenen Nennwert angehoben wird.

3. Verfahren nach einem der Ansprüche 1 oder 2, wobei der Rotorstrom weiter vermindert wird (i), nachdem das auf den Rotor (12) einwirkende Drehmoment das aufgrund der erhöhten Rotorspannung vorhandene Kippmoment (K2) erreicht hat.

4. Verfahren nach Anspruch 3, wobei danach die von dem Gleichrichter (21) über die Zwischenkreis-Spannung vorgegebene Rotorspannung weiter erhöht wird.

5. Verfahren nach Anspruch 4, wobei die Zwischenkreis-Spannung wieder über den an sich für die Zwischenkreis-Spannung vorgesehenen Nennwert angehoben wird.

6. Verfahren nach einem der vorstehenden Ansprüche, wobei ausgehend vom Stillstand der Asynchronmaschine (10) die Zwischenkreis-Spannung von dem Gleichrichter (21) zuerst auf einen vorgegebenen Wert und der Rotorstrom von dem Wechselrichter (19) zuerst auf einen möglichst großen Wert eingestellt wird.

7. Verfahren nach einem der vorstehenden Ansprüche, wobei die Asynchronmaschine (10) bei einer vorgegebenen Drehzahl entmagnetisiert und dann in den Normalbetrieb übergegangen wird.

8. Elektrische Schaltung zum Betreiben einer Asynchronmaschine (10), wobei der Stator (11) der Asynchronmaschine (10) mit einem Energieversorgungsnetz (15) verbunden ist, und wobei der Rotor (12) über einen Wechselrichter (19), einen Gleichspannungs-Zwischenkreis (20) und einen Gleichrichter (21) mit dem Energieversorgungsnetz (15) verbunden ist, **dadurch gekennzeichnet, dass** der Wechselrichter (19) derart ausgebildet ist, dass der von ihm vorgegebene Rotorstrom vermindert wird (e), nachdem das auf den Rotor (12) einwirkende Drehmoment das aufgrund der Rotorspannung vorhandene Kippmoment (K1) unterschritten hat, und dass der Gleichrichter (21) derart ausgebildet ist, dass danach die von dem Gleichrichter (21) über die Zwischenkreis-Spannung vorgegebene Rotorspannung erhöht wird (f).

9. Elektrische Schaltung nach Anspruch 8, wobei der Gleichrichter (21) derart ausgebildet ist, dass die Zwischenkreis-Spannung über den an sich für die Zwischenkreis-Spannung vorgesehenen Nennwert angehoben wird.

10. Elektrische Schaltung nach einem der Ansprüche 8 oder 9, wobei kein Anfahr-Umrichter oder dergleichen vorhanden ist.

## Claims

1. Method for starting an asynchronous machine (10), wherein the stator (11) of the asynchronous machine (10) is connected to an energy supply network (15), and wherein the rotor (12) is connected to the energy supply network (15) via an inverter (19), a DC intermediate circuit (20) and a rectifier (21), **characterised in that** the rotor current predefined by the inverter (19) is reduced (e) after the torque acting on the rotor (12) has fallen below the tip moment (K1) present because of the rotor voltage, and that thereafter the rotor voltage predefined by the rectifier (21) via the intermediate circuit voltage is increased (f).

2. Method according to claim 1, wherein the intermediate circuit voltage is raised above the nominal value provided in itself for the intermediate circuit voltage.

3. Method according to any of claim 1 or 2, wherein the rotor current is reduced further (i) after the torque acting on the rotor (12) has reached the tip moment (K2) present because of the increased rotor voltage.

4. Method according to claim 3, wherein thereafter, the rotor voltage predefined by the rectifier (21) via the intermediate circuit voltage is increased further.

5. Method according to claim 4, wherein the intermediate circuit voltage is raised again above the nominal value provided in itself for the intermediate circuit voltage.

6. Method according to any of the preceding claims, wherein starting from a standstill of the asynchronous machine (10), the intermediate circuit voltage is set by the rectifier (21) first to a predefined value and the rotor current is set by the inverter (19) first to a value as high as possible.

7. Method according to any of the preceding claims, wherein the asynchronous machine (10) demagnetizes at a given rotation speed and then transfers to normal operation.

8. Electrical circuit for operating an asynchronous machine (10), wherein the stator (11) of the asynchronous machine (10) is connected to an energy supply network (15), and wherein the rotor (12) is connected to the energy supply network (15) via an inverter (19), a DC intermediate circuit (20) and a rectifier (21), **characterised in that** the inverter (19) is formed such that the rotor current it predefines is reduced (e) after the torque acting on the rotor (12) has fallen below the tip moment (K1) present because of the rotor voltage, and that the rectifier (21) is formed such that thereafter the rotor voltage predefined by the rectifier (21) via the intermediate circuit voltage is increased (f).

9. Electrical circuit according to claim 8, wherein the rectifier (21) is formed such that the intermediate circuit voltage is raised above the nominal value provided in itself for the intermediate circuit voltage.

10. Electrical circuit according to one of claims 8 or 9, wherein no start-up converter or similar is present.

## Revendications

1. Procédé de démarrage d'une machine asynchrone (10), le stator (11) de la machine asynchrone (10) étant relié à un réseau d'alimentation en énergie (15) et le rotor (12) étant relié au réseau d'alimentation en énergie (15) par l'intermédiaire d'un onduleur (19), d'un circuit intermédiaire à tension continue (20) et d'un redresseur (21), **caractérisé en ce que** le courant de rotor prédéfini par l'onduleur (19) est diminué (e) après que le couple agissant sur le rotor (12) est devenu inférieur au couple de décrochage (K1) présent du fait de la tension de rotor, et **en ce que** la tension de rotor prédéfinie par le redresseur (21) par l'intermédiaire de la tension de circuit intermédiaire est ensuite augmentée (f).

2. Procédé selon la revendication 1, dans lequel la tension de circuit intermédiaire est augmentée au-dessus de la valeur nominale prévue en soi pour la tension de circuit intermédiaire.

3. Procédé selon une des revendications 1 ou 2, dans lequel le courant de rotor est diminué davantage (i) après que le couple agissant sur le rotor (12) a atteint le couple de décrochage (K2) présent du fait de la tension de rotor augmentée.

4. Procédé selon la revendication 3, dans lequel la tension de rotor prédéfinie par le redresseur (21) par l'intermédiaire de la tension de circuit intermédiaire est ensuite augmentée davantage.

5. Procédé selon la revendication 4, dans lequel la tension de circuit intermédiaire est de nouveau augmentée au-dessus de la valeur nominale prévue en soi pour la tension de circuit intermédiaire.

6. Procédé selon une des revendications précédentes, dans lequel, à partir de l'arrêt de la machine asynchrone (10), la tension de circuit intermédiaire est réglée d'abord par le redresseur (21) à une valeur prédéfinie et le courant de rotor est réglé d'abord par l'onduleur (19) à une valeur aussi grande que possible.

7. Procédé selon une des revendications précédentes, dans lequel la machine asynchrone (10) est démagnétisée à une vitesse de rotation prédéfinie et transférée ensuite en fonctionnement normal.

8. Circuit électrique pour faire fonctionner une machine asynchrone (10), le stator (11) de la machine asynchrone (10) étant relié à un réseau d'alimentation en énergie (15) et le rotor (12) étant relié au réseau d'alimentation en énergie (15) par l'intermédiaire d'un onduleur (19), d'un circuit intermédiaire à tension continue (20) et d'un redresseur (21), **caractérisé en ce que** l'onduleur (19) est conçu de façon que le courant de rotor prédéfini par lui soit diminué (e) après que le couple agissant sur le rotor (12) est devenu inférieur au couple de décrochage (K1) présent du fait de la tension de rotor, et **en ce que** le redresseur (21) est conçu de façon qu'ensuite la tension de rotor prédéfinie par le redresseur (21) par l'intermédiaire de la tension de circuit intermédiaire soit augmentée (f).

9. Circuit électrique selon la revendication 8, dans lequel le redresseur (21) est conçu de façon que la tension de circuit intermédiaire soit augmentée au-dessus de la valeur nominale prévue en soi pour la tension de circuit intermédiaire.

10. Circuit électrique selon une des revendications 8 ou 9, dans lequel aucun convertisseur de fréquence de démarrage ou analogue n'est présent.
